Europäisches Patentamt

European Patent Office

Office européen des brevets

(11) Publication number: **0 530 638 A1**

(12) **EUROPEAN PATENT APPLICATION**

(21) Application number: **92114427.5**

(22) Date of filing: **25.08.92**

(51) Int. Cl.⁵: **C08L 97/02**, C08G 18/64

(30) Priority: **06.09.91 US 755711**

(43) Date of publication of application:
**10.03.93 Bulletin 93/10**

(84) Designated Contracting States:
**AT CH DE DK FR IT LI SE**

(71) Applicant: **MILES INC.**
**One Mellon Center 500 Grant Str.**
**Pittsburgh, PA 15219-2502(US)**

(72) Inventor: **Markusch, Peter H.**
**111 Lynbrook Drive**
**McMurray, PA 15317(US)**
Inventor: **Layton, Heber D.**
**R.D. No. 3, 162 Kara Place**
**Aliquippa, PA 15001(US)**
Inventor: **Sanders, Josef**
**Geibel Strasse 3**
**W-5090 Leverkusen(DE)**
Inventor: **Rosthauser, James W.**
**1430 Sunset Lane**
**Glen Dale WV(US)**
Inventor: **Mafoti, Robson**
**1111 Cochran Road**
**Pittsburgh, PA 15243(US)**

(74) Representative: **Müller, Gerhard, Dr. et al**
**BAYER AG Konzernverwaltung RP**
**Patentabteilung**
**W-5090 Leverkusen 1 Bayerwerk (DE)**

(54) **Process for the preparation of compression molded materials.**

(57) The present invention is directed to a process for the preparation of panels or molded products wherein particles of materials capable of being compacted are mixed with a binder and the mixture are subsequently formed into panels or molded products by the application of heat and pressure. The Invention resides in the use of a binder which is a solid polyisocyanate having a melting point above 40°C.

## BACKGROUND OF THE INVENTION

This invention relates to a process for the production of compression molded materials using polyisocyanate binders.

Compression molded materials, such as particle board, waferboard, fiberboard, or other such molded products, are conventionally produced by hot pressing inorganic or organic raw materials, such as a mass of wood wafers, wood fibers, or other material containing lignocellulose, with various glues or binders. The composite panel industry, which is the largest manufacturer of compression molded materials, still uses formaldehyde containing resins which have generally been regarded as the most important binders, including, for example, aqueous dispersions or solutions of urea-formaldehyde ("aminoplast") or phenol-formaldehyde ("phenoplast") resins. Solid aminoplasts and phenoplasts have also been used in the art.

The use of liquid polyisocyanates or polyisocyanate solutions instead of formaldehyde-based resins as binders for pressboard is also known (see, e.g., U.S. Patents 3,870,665, 4,359,507, 4,374,791 and 4,414,361; British Patents 1,148,016 and 1,387,454; "Particleboard Binder Promises Performance Without Emissions," FOREST INDUSTRIES, April 1979, pages 76-79 and 117; "Novel Isocyanate Binder Systems for Composite Wood Panels", Journal of Elastomers and Plastics, Volume 16, July 1984, pages 206-228; and Chapter 12 of the Polyurethane Handbook, G. Oertel, 1985, Hanser Publishers, Munich, pages 563-576). Polyisocyanates, which have been increasingly used industrially as binders since 1973, improve the stability and moisture resistance and increase the mechanical strength of the products.

The isocyanates most often used are liquid polymeric MDI types. There are several advantages to use polyisocyanate binders: less binder based on wood can be used (which can compensate for the higher price of the polymeric MDI), and the resulting products (particle or fiber boards) exhibit less water absorption (which results in better wet strength and dimensional stability).

There are, however, also disadvantages related to the use of liquid polymeric isocyanates. Wood always contains water and the isocyanates will react with water. Although this reaction is slow at ambient temperature, it results in a limited time (i.e. several hours) between the application of the isocyanate on wood particles and the conversion into a composite board in a heated press. Thus, the use of liquid polyisocyanates does not allow the preparation of storage stable intermediates which can be processed into final parts even after days of interim storage.

Another aspect of using polymeric MDI is that it still contains large amounts of monomeric MDI (usually above 50% by weight) which may be volatilized under the curing conditions and cause environmental concerns.

## DESCRIPTION OF THE INVENTION

The present invention is directed to the use of solid powdered polyisocyanates as binders, preferably for lignocellulose-containing raw materials. The use of solid versus liquid polyisocyanates has several advantages:

i) solids are easy to handle and either have no or very low vapor pressures, ii) solids will not volatilize under the processing conditions thus substantially eliminating environmental concerns, and iii) solid isocyanate/wood mixtures can be prepared and stored several days prior to being processed (extended lifetime). In contrast, compositions containing liquid polyisocyanates must be processed (i.e., converted into panels or molded parts) within about 5 hours after combining the polyisocyanates with lignocellulose materials.

The invention broadly comprises an improved process for the preparation of hot compression molded materials comprising mixing a solid polyisocyanate binder with a material capable of being compacted (preferably, a lignocellulose-containing material), and forming the resultant mixture into panels or molded parts by the application of heat and pressure, preferably utilizing metal caul plates or platens. The improvement resides in the use of a solid polyisocyanate which has a melting point above 40°C.

Suitable solid polyisocyanates for use in the present invention include (1) any diisocyanates or polyisocyanates or mixtures thereof providing they have a melting point above 40°C, preferably above 60°C and, more preferably, above 80°C. Such compounds include aliphatic, cycloaliphatic, araliphatic, and preferably aromatic and heterocyclic polyisocyanates. Specific examples include polyphenyl polymethylene polyisocyanates obtained by phosgenating aniline-formaldehyde condensates, as described in British Patents 874,430 and 848,671; perchlorinated aryl polyisocyanates; polyisocyanates containing carbodiimide groups; polyisocyanates containing allophanate groups; polyisocyanates containing isocyanurate groups; polyisocyanates containing urethane or urea groups; polyisocyanates containing acylated urea groups; polyisocyanates containing biuret groups; polyisocyanates produced by telomerization reactions;

EP 0 530 638 A1

polyisocyanates containing ester groups; diisocyanates preferably containing uretdione groups and diisocyanates containing urea groups. The following are mentioned as specific polyisocyanates which may be used in accordance with the invention:

| Melting Point | |
|---|---|
| p-xylylene diisocyanate | 45-46°C |
| 1,3-phenylene diisocyanate | 51°C |
| 1,4-phenylene diisocyanate | 94-96°C |
| 1,3-dimethylbenzene-4,6-diisocyanate | 70-71°C |
| 1,4-dimethylbenzene-2,5-diisocyanate | 76°C |
| 1-nitrobenzene-2,5-diisocyanate | 59-61°C |
| 1,4- dichlorobenzene-2,5-diisocyanate | 134-137°C |
| 1-methoxybenzene-2,4-diisocyanate | 75°C |
| 1-methoxybenzene-2,5-diisocyanate | 89°C |
| 1,3-dimethoxybenzene-4,6-diisocyanate | 125°C |
| Azobenzene-4,4'-diisocyanate | 158-161°C |
| Trans,trans-4,4'-diisocyanatodicylohexylmethane | 83°C |
| Diphenylether-4,4'-diisocyanate | 66-68°C |
| Diphenylmethane-4,4'-diisocyanate | 42°C |
| Diphenyldimethylmethane-4,4'-diisocyanate | 92°C |
| Naphthalene-1,5-diisocyanate | 130-132°C |
| 3,3'-dimethylbiphenyl-4,4'-diisocyanate | 68-69°C |
| Diphenyl disulfide-4,4'-diisocyanate | 58-60°C |
| Diphenyl sulfone-4,4'-diisocyanate | 154°C |
| 1-methylbenzene-2,4,6-triisocyanate | 75°C |
| 1,3,5-trimethylbenzene-2,4,6-triisocyanate | 93°C |
| Triphenylmethane-4,4',4''-triisocyanate | 89-90°C |
| 4,4'-diisocyanato-(1,2)-diphenylethane | 88-90°C |
| Dimeric-1-methyl-2,4-phenylene diisocyanate | 120°C |
| Dimeric-1-isopropyl-2,4-phenylene diisocyanate | 125°C |
| Dimeric-1-chloro-2,4-phenylene diisocyanate | 177°C |
| Dimeric-2,4'-diisocyanatodiphenylsulfide | 178-180°C |

According to the invention, it is preferred to use dimeric 1-methyl-2,4-diisocyanatobenzene, dimeric 4,4'-diisocyanatodiphenylmethane and solid reaction products of organic isocyanates and 2-methyl-1,3-propane diol. The dimeric diisocyanates may also be produced in finely divided form by "in situ" dimerization, for example in plasticizers, solvents, water or polyols, and may optionally be subjected in that form to an amine stabilization reaction. The reaction products of 2-methyl-1,3-propane diol and organic isocyanates are described in U.S. Application Serial Number 07/454,215, filed on December 21, 1989, the disclosure of which is herein incorporated by reference.

Also preferred are solid adducts of commercial aromatic polyisocyanates such as toluene diisocyanate and diisocyanatodiphenylmethane. These include solid reaction products of such polyisocyanates with water. Also suitable are partially or completely blocked solid polyisocyanates. Blocking will help prevent premature reaction with any moisture present in the lignocellulose-containing materials and will thus extend the storage life of the composition. In addition, blocking will also improve the safety involved since the resulting products do not contain free isocyanate groups at ambient temperature and the temperatures used to cure the products are usually above the unblocking temperature of the polyisocyanate used.

Suitable substrates used in the process of the invention include lignocellulose-containing raw materials that can be bonded with the binders according to the invention. Examples of suitable lignocellulose-containing materials include wood, woodbark, cork, bagasse straw, flax, bamboo, esparto, rice husks, and sisal and coconut fibers. Other suitable substrates for compression molding include other organic raw materials (for example, all kinds of plastic waste) and inorganic raw materials (for example, expanded mica or silicate balls). The substrate may be used in the form of granulates, shavings or chips, fibers, spheres, or powder and may have a moisture content of, for example, from about 0 to about 35% by weight (preferably from 4 to 20% by weight).

In the process of the invention, the binder is mixed with the organic and/or inorganic material to be bonded in a quantity of about 0.5 to about 20% by weight (preferably 2 to 12% by weight), based on the

3

EP 0 530 638 A1

total weight of the end product. If desirable, part of the solid polyisocyanate can be replaced by solid phenoplast resins to lower the overall binder cost. In this case, the urethanes or ureas formed can act as a scavenger for formaldehyde and thereby reduce or eliminate undesirable emissions. When used, the phenoplast resin is typically used in an amount of from 1 to 80% by weight, preferably from 1 to 50% by weight based upon the weight of the solid polyisocyanate. The resultant material is compressed to form boards or three dimensionally shaped molded products, generally under heat and pressure (for example, about 70 to about 250°C and about 1 to about 150 bar).

Multilayered boards or molded parts may be produced in analogous manner from veneers, paper, or woven fabrics by treating the layers with the binder as described above and subsequently pressing them, generally at elevated temperature and elevated pressure. Temperatures of from about 100 to about 250°C are preferred, with 130 to 200°C being most preferred. The initial compression pressure is preferably in the range of from about 5 to about 150 bar, although the pressure in most cases drops towards 0 bar during the compression process.

The following examples further illustrate details for the process of this invention. The invention, which is set forth in the foregoing disclosure, is not to be limited either in spirit or scope by these examples. Those skilled in the art will readily understand that known variations of the conditions of the following procedures can be used. Unless otherwise noted, all temperatures are degrees Celsius and all percentages are percentages by weight.

## EXAMPLES

In the examples, the following isocyanates were used:

ISO A: the reaction product of 1833 parts of 4,4'-methylenebis(phenyl isocyanate), 165 parts of 2-methyl-1,3-propane diol and 2 parts of trimethylolpropane, having an NCO group content of 23% by weight and a melting point of 95°C;

ISO B: the reaction product of 1773 parts of a polyphenyl polymethylene polyisocyanate (having an NCO group content of 32.9% by weight, a diisocyanate content of 78%, 22% of which is the 2,4'-isomer, and a viscosity at 25°C of 22 mPa.s) and 327 parts of 2-methyl-1,3-propane diol having an NCO group content of 13% by weight and a melting point of 110°C;

ISO C: the reaction product of 1925 parts of 4,4'-methylenebis(phenyl isocyanate), 175 parts of 2-methyl-1,3-propane diol having an NCO group content of 23% by weight and a melting point of 100°C;

ISO D: the dimer of toluene diisocyanate having an NCO content of 24.3% by weight and a melting point of 120°C;

ISO E: 4,4'-methylenebis(phenyl isocyanate).

## EXAMPLE A

Aspen wafers at 9% moisture content were placed in a laboratory drum blender. One percent wax (Paracol 804N, available from Hercules) as a 50% water emulsion was added. As is known in the art, waxes are typically used to aid in the water repellency of the finished product. After wax addition a solid, powdered binder was added. The wafers were then blended for 4 minutes. Sufficient wafers were formed into a deckle box to form an 46 cm x 46 cm x 1 cm, 0.7 gm/cm$^3$ density board. The resulting mats were pressed to a one half inch thickness at 177°C at a pressure of 31 bars for 4 1/2 minutes. Properties are listed in the table below.

4

WAFERBOARD PROPERTIES

As tested in accordance with ASTM D-1037

|  |  | BENDING | | | 24 HR SOAK IN WATER | |
|---|---|---|---|---|---|---|
| BINDERS | % APPLIED | IB (psi) | MOR (psi) | MOE (psi) | % T.S. | % Abs |
| ISO A | 2.5 | 43 | 4214 | 537,600 | 36 | 30 |
| ISO B | 2.5 | 76 | 5171 | 463,200 | 57 | 90 |
| ISO C | 3.5 | 39 | 4823 | 489,000 | 69 | 107 |

IB    =    internal bond

MOR  =    modulus of rupture

MOE  =    modulus of elasticity

%T.S.=    % thickness swell after soaking at room temperature for 24 hours in water

%Abs =    % absorption of water

EXAMPLE B

Ponderosa pine fibers at 5% moisture content were placed in a laboratory rotary drum blender. Two percent molten slack wax (for water repellency) was added. After wax addition a solid, powdered binder was added and thoroughly blended. slack wax (for water repellency) was added. After wax addition a solid, powdered binder was added and thoroughly blended.

Sufficient fiber was formed into a deckle box to form a 61 cm x 61 cm x 0.25 cm, 0.96 gm/cm$^3$ density board. The mats were pressed to 1/2 inch thickness at 204°C under a pressure of 31 bars for 3 1/2 minutes. Properties are listed in the table below. The IB, MOR, and MOE were tested according to ASTM D-1037.

| HARDBOARD PROPERTIES | | | | | |
|---|---|---|---|---|---|
| BINDERS | BENDING | | | | % Linear Expansion |
| | % APPLIED | IB (psi) | MOR (psi) | MOE (psi) | |
| ISO D | 5 | 51 | 3823 | 432,000 | .94 |
| ISO D | 10 | 106 | 6329 | 625,000 | .94 |
| ISO E | 5 | 56 | 4656 | 530,000 | .58 |

The % linear expansion was determined by first measuring the length of the sample at ambient conditions. The sample is then placed in a pressure tank, which is then filled with water, vacuum pulled for 30 minutes and then pressurized for 30 minutes. The sample is then removed from the tank, and the length measured. The growth in length is expressed as a % linear expansion.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1. In a process for the preparation of panels or molded products wherein particles of materials capable of being compacted are mixed with a binder and the mixture are subsequently formed into panels or molded products by the application of heat and pressure, the improvement wherein said binder is a solid polyisocyanate having a melting point above 40°C.

2. The process of Claim 1, wherein said solid polyisocyanate has a melting point above 60°C.

3. The process of Claim 2, wherein said solid polyisocyanate has a melting point above 80°C.

4. The process of Claim 1, wherein said binder is used in an amount of from about 0.5 to about 20% by weight based on the total weight of said mixture.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 394 789 (BAYER AG)<br>* page 2, line 39 - line 41 *<br>* page 4, line 23 - line 25 *<br>* page 7, line 44 - page 8, line 5 *<br>* page 9, line 6 *<br>* page 9, line 20 - line 23 *<br>* page 9, line 31 - line 33 *<br>* page 12, line 17 - line 18 *<br>* page 12, line 45 - line 48 *<br>--- | 1-3 | C08L97/02<br>C08G18/64 |
| X | US-A-4 944 823 (J. STOFKO)<br>* abstract *<br>* column 4, line 24 - line 30 *<br>* column 4, line 43 - line 57 *<br>* column 7, line 28 - line 50; example 1 *<br>--- | 1,4 | |
| X | US-A-4 490 517 (FUZESI ET AL.)<br>* column 1, line 1 - line 11 *<br>* column 4, line 1 - line 23 *<br>* column 4, line 57 - column 5, line 30; claims 1,5,6,11-13; examples 1-3 *<br>--- | 1,4 | |
| D,A | GB-A-1 148 016 (DEUTSCHE NOVOPAN GMBH)<br>--- | | TECHNICAL FIELDS SEARCHED (Int. Cl.5) |
| A | DE-A-1 669 759 (BADISCHE ANILIN- & SODA FABRIK AG)<br>* page 3, line 10 - line 21 *<br>* page 5, line 9 - line 17 *<br>--- | 1 | C08L<br>C08G<br>C08K |
| A | AT-A-276 734 (DEUTSCHE NOVOPAN GESELLSCHAFT MBH & CO)<br>* page 2, line 9 - line 10 *<br>----- | 1 | |

The present search report has been drawn up for all claims

| Place of search | Date of completion of the search | Examiner |
|---|---|---|
| THE HAGUE | 21 DECEMBER 1992 | MAZET J. |